Europäisches Patentamt

European Patent Office

Office européen des brevets

(19)

(11) Publication number: **0 214 754**
**B1**

(12) **EUROPEAN PATENT SPECIFICATION**

(45) Date of publication of the patent specification:
09.08.89

(51) Int. Cl.⁴: **F16F 9/02**

(21) Application number: **86305924.2**

(22) Date of filing: **01.08.86**

(54) Telescoping strut shock isolator.

(30) Priority: **26.08.85 US 769220**

(43) Date of publication of application:
**18.03.87 Bulletin 87/12**

(45) Publication of the grant of the patent:
**09.08.89 Bulletin 89/32**

(84) Designated Contracting States:
**DE GB IT NL**

(56) References cited:
**FR-A-2 173 498**
**GB-A-2 000 255**
**GB-A-2 060 814**
**GB-A-2 116 665**

(73) Proprietor: **SPERRY CORPORATION, 1290, Avenue of the Americas, New York, N.Y. 10019(US)**

(72) Inventor: **Scotto, Dominick Peter, 35 Forest Drive, Plainview New York 11803(US)**

(74) Representative: **Singleton, Jeffrey et al, ERIC POTTER & CLARKSON 27 South Street, Reading Berkshire, RG1 4QU(GB)**

ACTORUM AG

## Description

The present invention relates to an apparatus for shock isolation and more particularly to sliding piston, telescopic strut apparatus.

Conventional shock isolation devices particularly for naval applications consist typically of damped springs or resilient elements interposed between the ship structure and the equipment to be isolated from shock.

Damped springs in various forms are generally satisfactory for protecting equipment that is not alignment sensitive. Were equipment to be protected from shock is alignment sensitive, (for example, radar antenna systems or inertial guidance systems) various types of latched linkages and guided carriages are used in conjunction with springs and resilient elements to restore alignment after a shock has been experienced. Also known are pneumatic shock isolators or dampers.

The present invention is defined in the appended claims and provides a shock isolator having a latching chamber, buffer chamber, air reserve chamber and a piston assembly comprising two interconnected piston heads moving within the latching and buffer chambers. The present invention provides controlled acceleration upon receiving a compressive load above a predetermined amplitude and resets to an original position when the compressive load falls below the predetermined amplitude.

The telescopic shock isolator of the present invention provides superior shock protection. The protected structure experiences only a moderate controlled acceleration during the entire shock cycle.

Alignment is kept kinematically rigid by compressed air when no shock is being experienced. During shock above a predetermined threshold, the invention yields axially and allows controlled acceleration of the protected structure. The protected structure is returned to its precise original position when the shock falls below the predetermined threshold.

A shock isolator in accordance with the present invention will now be described in greater detail, by way of example, with reference to the accompanying drawings, in which:

Figure 1 illustrates the use of a plurality of shock isolators of the present invention to protect an alignment sensitive platform from shock,

and Figure 2 is a cross-sectional view of the shock isolator.

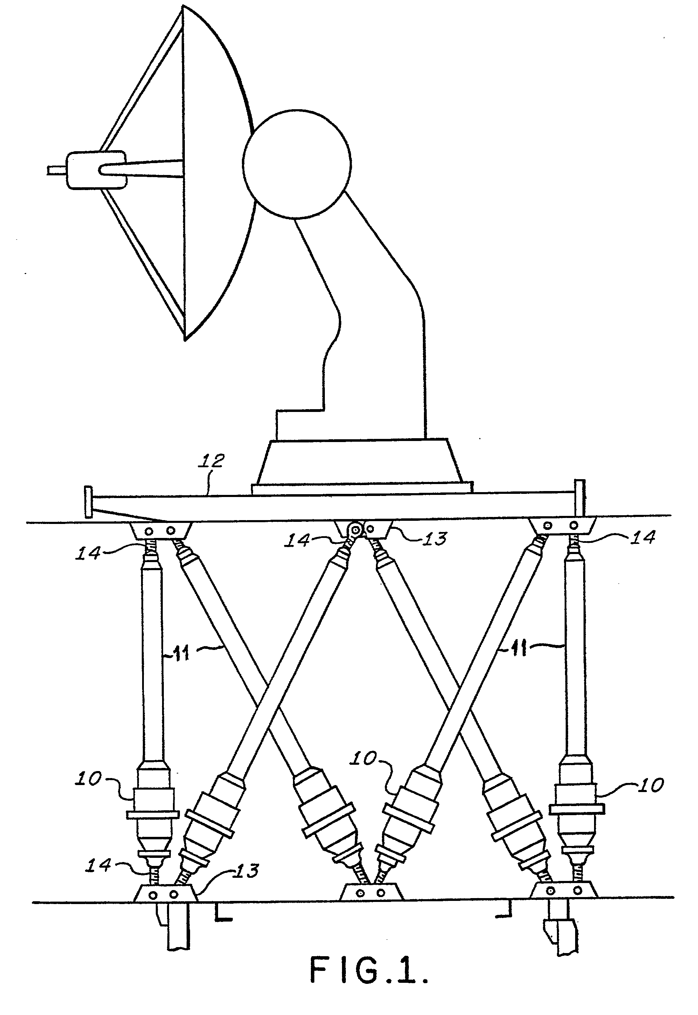

Figure 1 illustrates shock protection of a radar antenna using the present invention. The system comprises six telescopic shock isolators 10 and spacers 11 of the appropriate height for a platform 12 to be protected, the platform having the antenna mounted thereon. All six shock isolator 10/spacer 11 units are identical having ball joints 13 at each end and a screw type level adjuster 14. By changing the length of the spacer 11, the shock isolator 10 may be adapted to a variety of applications. Arranging the shock isolator 10/spacer 11 units in six triangles as shown in Figure 1 imparts kinematic rigidity as long as the length of each shock isolator 10/spacer 11 unit is constant. The shock isolators 10 yield axially when subjected to a compressive load above a predetermined release threshold and then return precisely to their original length when the compressive load falls below the predetermined release threshold. The original alignment of the platform 12 is thereby accurately restored.

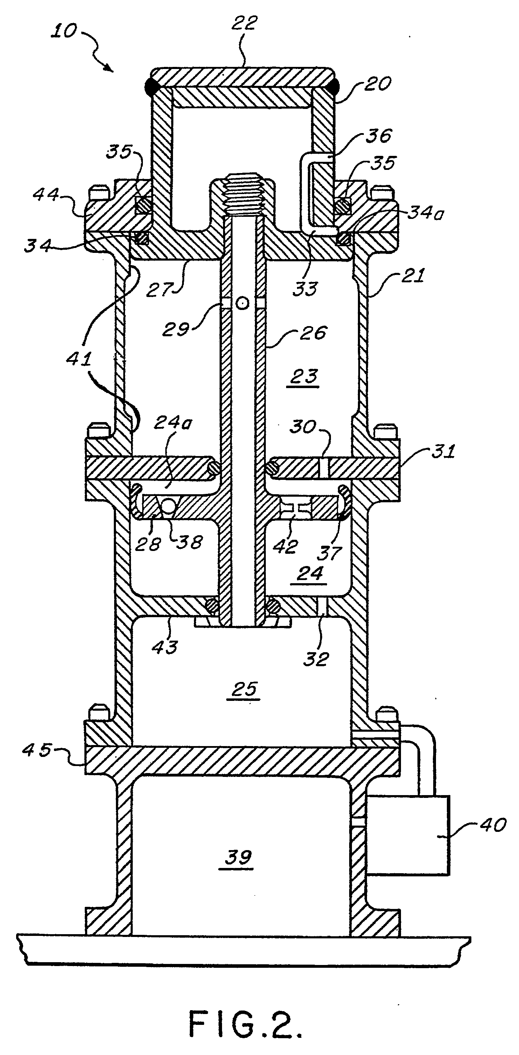

Referring now to Figure 2, the construction of each shock isolator 10 will be described. Each shock isolator 10 consists of a hollow piston 20 fitted within a cylinder 21. The top of the piston 20 may be attached to a spacer 11 as in Figure 1 or directly to the platform or load to be isolated 22 as shown in Figure 2. Each cylinder 21 is divided into three chambers: a latching chamber 23, a buffer chamber 24, and a reserve air chamber 25. A hollow piston guide tube 26 attached to the piston 20 supports a buffer piston head 28 and is open to the reserve air chamber 25. A latching ledge 27 of the piston 20 contains a primary gasket seal 34 which is a controlled confinement polymer of the crown and grooved type and is mechanically and chemically bonded to the piston latching ledge 27. The portion of the piston guide tube 26 passing through the latching chamber 23 has air bypass ports 29 which provide an air passage between the reserve air chamber 25 and the latching chamber 23. In the latched position shown in Figure 2, all chambers 23, 24 and 25 are at the same pressure due to the internal porting provided by the air bypass ports 29, a bleed orifice 30 in an intermediate cylinder head 31 which separates the latching chamber 23 and the buffer chamber 24, and a bleed orifice 32 in a further intermediate cylinder head (43) which orifice connects the reserve air chamber 25 with the buffer chamber 24.

Thus the latching chamber 23 is defined by a primary cylinder head 44 and the intermediate cylinder head 31; the buffer chamber 24 by the intermediate cylinder head 31 and the further intermediate cylinder head 43; and the reserve air chamber by the further intermediate cylinder head 43 and a baseplate 45 on which the cylinder 21 is mounted.

The volume 33 between the primary face seal 34 and the upper piston rod running seal 35 is vented to the atmosphere through a piston rod seal bypass 36. The buffer piston head 28 has a cup seal 37 around its periphery and contains six ball check valves 38 and three deceleration control valves (not shown).

The primary souce of pressurised air for the shock isolator 10 is contained in an integral high pressure air storage tank 39 at 2000 psig. ($13788 \times 10^3$ Pa). Air is fed into the reserve air chamber 25 through a regulator 40 which provides a working pressure of 100 psig ($689.4 \times 10^3$ Pa) in the air reserve chamber 25.

Operation of the shock isolator 10 will now be described. The shock isolator 10 as shown in Figure 2 is in the pressurised latched state. Air pressure is uniform throughout chambers 23, 24 and 25 and forces primary seal 34 against cylinder banking surface 34a establishing a latching preload $L_L$. If a load 22 of mass W/g is attached to the piston 20, the reaction force $F_R$ supplied by the cylinder 21 at the banking surface 34a is $F = L_L - W$ when the accelera-

tion of the piston $A_p$ = 0. If the banking surface 34a restraint were removed, the piston 20 would experience acceleration:

$$A_p = \frac{F_R \lambda \; 9}{W} = A_{PL}$$

where $A_{PL}$ = the piston latching acceleration. Therefore, at any cylinder 21 acceleration less than piston 20 latching acceleration $A_{PL}$, the piston 20 and cylinder 21 will remain in contact at the banking surface 34a. At cylinder 21 acceleration greater than $A_{PL}$, the piston 20 will lag the cylinder 21. When the piston 20 displacement is sufficient to open the gasket seal 34, for example 0.015 inches (0.038 cms) to 0.030 inches (0.076 cms), pressurised air from the latching chamber 23 will flow behind the piston latching ledge 27 and the piston 20 acceleration will decrease slightly. The piston 20 is now in its unlatched state. Pressurised air will not escape because as the primary seal 34 opens, the piston rod bypass tube 36 moves past the piston rod seal 35, thus preventing any escape of pressurised air.

Once unlatched, the piston 20 moves upward more slowly than does the cylinder 21. Buffet chamber 24 is divided into an upper section 24a and a lower section 24 by the piston head 28 and the ball check valves 38 and decelleration control valves are open. Tile cup seal 37 collapses and pressurised air moves freely between the upper 24a and lower 24 sections of the buffer chamber 24.

In the illustrated preferred embodiment, the latching chamber 23 is five inches (12.7 cms) in length including a one-inch (2–5 cm) overtravel zone 41 at each end. The diameter of the overtravel zone 41 just matches the diameter of the piston 20 and upon the piston 20 entering the overtravel zone 41, air pressure builds up because air is no longer spilling behind the latching ledge 27.

Thus, the piston 20 is brought to a controlled stop before experiencing a hard stop against the intermediate cylinder head 31. When the piston 20 velocity and cylinder 21 velocity are equal, the relative displacement of piston 20 and cylinder 21 will be at a maximum.

As the reset cycle begins, the piston 20 is moving faster than the cylinder 21. The check valves 38 and deceleration control valves close and the cup seal 37 presses against the walls of the cylinder 21 thereby sealing the upper section 24a of the buffer chamber 24 except for a small amount of air passing through a throttle orifice 42. Pressure will continue to rise in the upper section 24a of the buffer chamber 24 as the piston 20 moves upwards towards the latched position. By proper selection of the size of the throttle orifice 42, the piston will arrive at the latched position shown in Figure 1 when the cylinder 21 and piston 20 have a near zero relative velocity. Once the primary seal 34 contacts the banking surface 34a, the shock isolator 10 is latched and held in position by pressurised air within the latching chamber 23.

## Claims

1. A shock isolator apparatus comprising a cylinder filled with pressurised air and a piston assembly movable within the cylinder, characterised in that the cylinder (21) has a first (23), second (24) and third (25) chamber, the first chamber being positioned between a primary cylinder head (44), having a central opening therethrough disposed at a first end of the cylinder and a first intermediate cylinder head (31) disposed within the cylinder at a predetermined distance from the primary cylinder head, the second chamber being positioned between the first intermediate cylinder head and a second intermediate cylinder head (43) disposed within the cylinder a predetermined distance from the first intermediate cylinder head, with the first and second intermediate cylinder head (31 and 43) each having a central opening and at least one orifice (30, 32) therethrough, and the third chamber being positioned between the second intermediate cylinder head and a baseplate (45) affixed to a second end of said cylinder; and in that the piston assembly (20) has a first (27) and second (28) piston head adapted to move within the first and second chambers, respectively, upon application of a compressive load to the piston assembly, the second piston head (28) having a plurality of orifices (38, 38a) therethrough for allowing the pressurised air to pass through the orifices more easily when the piston moves into cylinder than in the opposite direction, the piston assembly (20) further comprising a hollow piston guide tube (26) fixedly attached at a first end to the first piston head (27), the guide tube having a plurality of openings (29) therethrough for communicating with the first chamber, and the guide tube passing through the central opening in the first and second intermediate cylinder heads and having a second end with an opening therethrough for communicating with the third chamber.

2. Apparatus according to claim 1, characterised in that it further comprises a high pressure air storage container (39), a regulator (40) coupled between the air storage container and the third chamber (25) for providing the cylinder (21) with a predetermined operating pressure.

3. Apparatus according to claim 1 or 2, characterised in that the plurality of openings in the second piston head (43) for facilitating a flow of air in one direction and restricting said flow in an opposite direction comprise a plurality of ball check valves (38) and deceleration control valves.

4. Apparatus according to any of the preceding claims, characterised in that it further comprises a cup valves (37) disposed at the periphery of the second piston head (28) for further facilitating the passage of air in one direction and restricting the passage of air in the opposite direction.

## Patentansprüche

1. Stoßisolator-Vorrichtung mit einem mit Druckluft gefüllten Zylinder und mit einer in dem Zylinder beweglichen Kolbenbaugruppe, dadurch gekennzeichnet, daß der Zylinder (21) eine erste (23), eine zweite (24) und eine dritte (25) Kammer aufweist, daß die erste Kammer zwischen einem primären Zylinderkopf (44), der eine durchgehende Mittelöffnung aufweist und an einem ersten Ende des Zylinders angeordnet ist, und einem ersten Zwischenzylinderkopf (31) liegt, der in dem Zylinder in einer vorgegebenen Entfernung von dem primären Zylinderkopf angeordnet ist, daß die zweite Kammer zwischen dem ersten Zwischenzylinderkopf und einem zweiten Zwischenzylinderkopf (43) liegt, der in dem Zylinder in einer vorgegebenen Entfernung von dem ersten Zwischenzylinderkopf angeordnet ist, wobei die ersten und zweiten Zwischenzylinderköpfe jeweils eine durchgehende Mittelöffnung und zumindestens eine Öffnung (30, 32) aufweisen, daß die dritte Kammer zwischen dem zweiten Zwischen-Zylinderkopf und einer Grundplatte (45) liegt, die an einem zweiten Ende des Zylinders befestigt ist, daß die Kolbenbaugruppe (20) einen ersten (27) und einen zweiten (28) Kolbenkopf aufweist, die sich in der ersten bzw. zweiten Kammer bei Ausübung einer Kompressionsbelastung auf die Kolbenbaugruppe bewegen können, daß der zweite Kolbenkopf (28) eine Mehrzahl von durchgehenden Öffnungen (38, 38a) aufweist, um das Durchströmen von Druckluft durch die Öffnungen bei einer Bewegung des Kolbens in den Zylinder hinein leichter zu machen als in der entgegengesetzten Richtung, daß die Kolbenbaugruppe (20) weiterhin ein hohles Kolbenführungsrohr (26) aufweist, das an einem ersten Ende fest mit dem ersten Kolbenkopf (27) verbunden ist, daß das Führungsrohr eine Vielzahl von durchgehenden Öffnungen (29) aufweist, die eine Verbindung mit der ersten Kammer herstellen, und daß das Führungsrohr durch die Mittelöffnungen in den ersten und zweiten Zwischenzylinderköpfen hindurchläuft und ein zweites Ende mit einer durchgehenden Öffnung zur Verbindung mit der dritten Kammer aufweist.

2. Vorrichtung nach Anspruch 1, dadurch gekennzeichnet, daß sie weiterhin einen Hochdruck-Druckluftspeicherbehälter (39) und einen zwischen dem Druckluftspeicherbehälter und der dritten Kammer (25) eingeschalteten Regler (40) zur Versorgung des Zylinders (21) mit einem vorgegebenen Betriebsdruck aufweist.

3. Vorrichtung nach Anspruch 1 oder 2, dadurch gekennzeichnet, daß die Mehrzahl von Öffnungen in dem zweiten Kolbenkopf (43) zur Erleichterung der Druckluftströmung in einer Richtung und zur Beschränkung der Strömung in der entgegengesetzten Richtung eine Mehrzahl von Kugelrückschlagventilen (38) und Abbremssteuerventile umfaßt.

4. Vorrichtung nach einem der vorhergehenden Ansprüche, dadurch gekennzeichnet, daß sie weiterhin ein Kronenventil (37) aufweist, das am Umfang des zweiten Kolbenkopfes (28) zur weiteren Erleichterung der Druckluftströmung in einer Richtung und zur Beschränkung des Strömens der Luft in der entgegengesetzten Richtung angeordnet ist.

## Revendications

1. Appareil d'isolement contre les chocs, comprenant un cylindre rempli d'air comprimé et un ensemble à piston mobile dans le cylindre, caractérisé en ce que le cylindre (21) a une première (23), une seconde (24) et une troisième chambre (25), la première chambre étant disposée entre une tête principale (44) du cylindre qui a une ouverture centrale qui la traverse et qui est placée à une première extrémité du cylindre et une première tête intermédiaire (31) du cylindre placée dans le cylindre à une distance prédéterminée de la tête principale du cylindre, la seconde chambre étant placée entre la première tête intermédiaire du cylindre et une seconde tête intermédiaire (43) du cylindre placée dans le cylindre à une distance prédéterminée de la première tête intermédiaire du cylindre, la première et la seconde tête intermédiaire (31 et 43) du cylindre ayant chacune une ouverture centrale et au moins un orifice (30, 32) qui la traverse, et la troisième chambre étant placée entre la seconde tête intermédiaire du cylindre et une plaque de base (45) fixée à une seconde extrémité du cylindre, et en ce que l'ensemble à piston (20) a une première (27) et une seconde tête (28) de piston destinées à se déplacer dans la première et la seconde chambre respectivement lors de l'application d'une force de compression à l'ensemble à piston, la seconde tête (28) de piston ayant plusieurs orifices (38, 38a) qui la traversent et qui sont destinés à permettre le passage d'air comprimé dans les orifices plus facilement lorsque le piston se déplace vers l'intérieur du cylindre qu'en sens opposé, l'ensemble à piston (20) comportant en outre un tube (26) de guidage de piston fixé à une première extrémité à la première tête (27) de piston, le tube de guidage ayant plusieurs ouvertures (29) qui le traversent et qui sont destinées à communiquer avec la première chambre, et le tube de guidage passant par l'ouverture centrale de la première et de la seconde tête intermédiaire du cylindre et ayant une seconde extrémité qui a une ouverture destinée à communiquer avec la troisième chambre.

2. Appareil selon la revendication 1, caractérisé en ce qu'il comporte en outre un récipient (39) d'accumulation d'air à pression élevée, et un régulateur (40) monté entre le récipient d'accumulation d'air et la troisième chambre (25) afin qu'il crée une pression prédéterminée de travail dans le cylindre (21).

3. Appareil selon la revendication 1 ou 2, caractérisé en ce que les ouvertures formées dans la seconde tête (43) de piston afin que la circulation d'air dans un sens soit facilitée et que la circulation de l'air soit limitée dans l'autre sens, comportent plusieurs clapets à billes (38) et des soupapes de réglage de décélération.

4. Appareil selon l'une quelconque des revendications précédentes, caractérisé en ce qu'il comporte en outre un clapet (37) à cuvette placé à la périphérie de la seconde tête (28) de piston afin qu'il facilite le passage de l'air dans un sens et limite le passage de l'air dans l'autre sens.

FIG.1.

FIG.2.